**Europäisches Patentamt**

**European Patent Office**

**Office européen des brevets**

(19)

(11) Numéro de publication : **0 505 308 A1**

(12) # DEMANDE DE BREVET EUROPEEN

(21) Numéro de dépôt : **92500026.7**

(22) Date de dépôt : **20.03.92**

(51) Int. Cl.⁵ : **H02G 3/08, H02G 15/013**

(30) Priorité : **20.03.91 ES 9100702**

(43) Date de publication de la demande :
**23.09.92 Bulletin 92/39**

(84) Etats contractants désignés :
**AT BE CH DE FR IT LI PT**

(71) Demandeur : **GRC CONTROL, S.A.**
**Poligono Industrial CROS, Nave 3, c/Julio**
**Galvez Brussons s/n**
**E-08912 Badalona (Barcelona) (ES)**

(72) Inventeur : **Garcia Gimenez, Antonio**
**Caspe, 63 at.**
**E-08010 Barcelona (ES)**

(74) Mandataire : **Manresa Val, Manuel et al**
**Gerona n. 34**
**E-08010 Barcelona (ES)**

(54) **Système pour fermeture hermétique des accès d'éléments tubulaires à des carcasses.**

(57)    Il consiste en l'utilisation de deux semi-pièces jumelles (10a) et (10b), constituées par des blocs en matériau souple et résistant, comportant une cannelure (11), à gouge muni d'une série de nervures annulaires (12), transversales, lesdites semi-pièces, lorsque la carcasse se trouve fermée, sont disposées avec leurs cannelures (11) se faisant face, en entourant complètement l'élément tubulaire (21), agencé entre lesdites cannelures, et lorsque la boîte est fermée ledit élément (21) est entouré par lesdites deux semi-pièces (10a) et (10b), avec compression de leurs nervures annulaires (12) contre leur paroi externe et formation de plusieurs chambres étanches, adjacentes.

FIG.6

Le présent brevet consiste en un système pour fermeture hermétique des accès d'éléments tubulaires, comme par exemple des câbles, des tuyaux, etc. à des carcasses devant être étanches à des liquides et autres fluides, destinées à héberger des dispositifs de diverses natures, notamment électriques, qui pour une opératoire adéquate ont besoin d'une protection efficace des éléments (poussière, humidité, gaz, etc.) de l'environnement où ils sont installés.

Lesdites carcasses sous forme de boîtes, comprenant un corps et un couvercle, sont munies, en général, sur tout leur périmètre de fermeture et aux ouvertures de passage des organes de manoeuvre, de joints d'étanchéité.

## ANTECEDENTS DE L'INVENTION

Il est connu, sur le marché, appliqués aux fins de la présente invention, essentiellement les éléments suivants, pour rendre hermétique la section de passage à l'intérieur de carcasses étanches:

a) des manchons tubulaires, coaxiaux à l'élément tubulaire dont il s'agit, lequel s'insère à l'intérieur de celui-ci, réalisés en un matériau souple, avec au moins une portion de leur corps et section intérieure ayant un rétrécissement ou réduction progressive du passage, pour assurer un appui efficace des parois internes du manchon sur les parois externes dudit élément tubulaire ledit manchon disposant, de plus, à l'extérieur, d'une cannelure annulaire, à proximité de sa portion d'embouchure, pour la fixation de l'élément aux bords de l'orifice de passage.

b) manchons comprenant une section tronconique qui est coupée transversalement pour former un orifice ayant un passage plus petit que la section de l'élément tubulaire, celui-ci étant inséré à travers lui, avec serrage des bords de l'orifice obtenu sur les parois externes dudit élément tubulaire qui sont alors légèrement comprimées, comprenant un prolongement sous forme de plaque avec une cannelure périphérique, pour fixation sur la zone de l'orifice de passage;

c) presse-étoupe, ayant des moyens pour comprimer contre la section de l'élément tubulaire inséré à son travers un joint élastique déformable, une fois l'ensemble a été installé à l'embouchure de l'orifice d'accès, dont le positionnement est obtenu sur la demande d'une cannelure annulaire similaire à celle citée ci-dessus.

On peut citer comme faisant part de l'état de la technique dans ce domaine les brevets EP 286.340, EP 121.644 et EP 402.653.

Tous ces moyens pour rendre hermétique, en plus du coût de fabrication unitaire, qui dans le cas des presse-étoupes - par ailleurs les plus efficaces - est élevé, ont en commun l'inconvénient de l'incommodité que comporte leur installation, car tout d'abord il faut insérer à travers eux l'élément tubulaire dont il s'agit, et une fois ce dernier a été branché ou couplé au dispositif à l'intérieur de la carcasse, il faut positionner lesdits éléments d'herméticité, en les déplaçant le long de la section dudit élément tubulaire, avec le risque d'affecter la stabilité du branchement ou couplage, de l'élément tubulaire avec le dispositif, jusqu'à ce que ladite cannelure annulaire ou périphérique corresponde avec les bords de l'orifice d'accès sur la paroi desdits corps et boîte.

L'invention propose un système pour la fermeture hermétique, qui en plus d'un coût d'obtention équivalent aux joints à prestations inférieures, et très inférieur à celui d'un presse-étoupe, évite ledit inconvénient d'installation, en fournissant une herméticité supérieure à celle des éléments compris dans l'état de l'art, sans que son action sur l'élément tubulaire n'en affecte l'intégrité, ni le branchement ou couplage au dispositif dont il s'agit.

## DESCRIPTION DE L'INVENTION

Essentiellement, l'invention est basée sur l'utilisation pour constituer le joint de fermeture hermétique, de deux semi-pièces jumelles, constituées par des blocs, par exemple prismatiques droits, rectangulaires, en un matériau à forte densité, souple et résistant, chacune d'elles comportant sur une de ses faces plus grandes une cannelure à gouge longitudinale, comprenant une série de nervures transversales, secteur-annulaires, lesdites semi-pièces étant agencées, en situation de fermeture de la carcasse, leurs cannelures se faisant face, et la conduite qu'elles définent coalignée avec l'orifice d'accès, positionnées par rapport à la carcasse, par emboîtement d'une portion de leur base dans des cavités respectives du corps et couvercle de ladite carcasse, de sorte que lesdites semi-pièces entourent complètement, comprimées, l'élément tubulaire dans sa section d'accès à l'intérieur de la carcasse.

Avec le système proposé, une fois l'élément tubulaire est convenablement couplé au dispositif que comporte la carcasse, et lorsque ladite carcasse est fermée, cet élément tubulaire restera fermement entouré par ces deux pièces, avec compression de ses nervures annulaires contre sa paroi externe, en déterminant la formation de plusieurs chambres étanches, annulaires, coaxiales à la section du câble, adjacentes longitudinalement, ce qui garantit l'herméticité de l'ensemble.

Pour renforcer l'efficacité de la fermeture, il a été prévu, au fond des cavités de pré-positionnement des deux semi-pièces sus-nommées, des nervures flanquées de dépressions, qui agiront en déformant le bloc qui forme chaque semi-pièce aux deux côtés de la section tubulaire intermédiaire, sur laquelle il est agencé en compression.

Les caractéristiques et avantages de l'invention apparaîtront plus clairement en lisant la description détaillée ci-après d'une façon de mise en oeuvre préférée de l'invention, donnée tout simplement à titre d'exemple non limitatif, et illustré sur les dessins ci-joints.

BREVE DESCRIPTION DES DESSINS

Dans lesdits dessins:

La fig. 1, illustre en élévation, par une de ses extrémités, une des semi-pièces jumelles préconisées pour rendre hermétique la section d'accès à la carcasse.

La fig. 2, est une vue en plan de la même semi-pièce, où on y observe sa cannelure à gouge et les nervures annulaires dont elle est pourvue.

La fig. 3, est une vue partiale, en plan, du couvercle, avec détail de la cavité ou s'appuie, emboîtée une des semi-pièces.

La fig. 4, illustre le corps formant la carcasse, qui héberge un certain dispositif, et il a été dessiné, dans ce cas, une semi-pièce pour fermeture hermétique, sur la cannelure de laquelle un câble est tendu, dont les conducteurs sont branchés aux bornes dudit dispositif.

La fig. 5, est une vue éclaté, en élevation, illustrant l'interrelation des deux semi-pièces, par rapport au corps et au couvercle de la carcasse et l'élément tubulaire, dans ce cas un câble ayant accès à celle-ci.

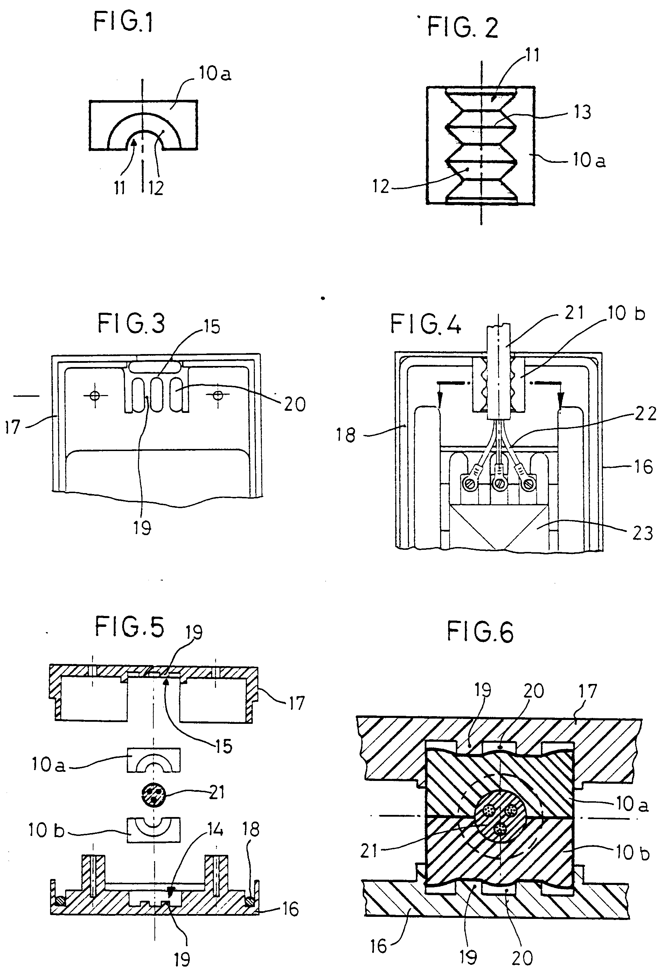

Finalement, la fig. 6, est une vue en coupe, illustrant le mode de travail en fermeture hermétique, des semi-pièces préconisées.

Sur les fig. 1 et 2, sont détaillées les caractéristiques d'une des deux pièces jumelles -10a-, sous forme de bloc prismatique, rectangulaire, employées pour obtenir une fermeture hermétique de la section d'accès à une carcasse, où on y observe la cannelure à gouge -11-, dont elle dispose et les nervures annulaires -12-, transversales et avantageusement distribuées à équidistance, le long de ladite cannelure -11-. Les nervures -12- présentent, dans une réalisation préférée, une coupe transversale triangulaire dont le sommet et/ou arête dépasse, légèrement arrondie.

Lesdites pièces -10a- et -10b- sont emboîtées par leur base dans des cavités -14- et -15- définies dans les éléments corps -16- et couvercle -17-, formant, respectivement, la carcasse, un desdits éléments -16- comportant au moins, de façon continue tout le long de sa section périphérique, un joint d'étanchéité -18-. Lesdits logements -14- et -15- restent directement se faisant face, en superposition, dans la situation de fermeture de la carcasse, tel qu'il est observé sur la figure 5, et comportent dans leur fond des nervures -19- flanquées de dépressions -20-, de sorte que lesdites nervures -19-, en situation de fermeture de la carcasse, coopèrent (voir détail de la figure 6), à la déformation locale des parties des semi-blocs, -10a- et -10b-, sur la section de l'élément tubulaire -21- dont il s'agit. En particulier, et comme illustre la figure 6, les nervures -19- déterminent une déformation d'une partie de chaque semi-bloc -10a- et -10b- affectant la section où sont situées les cannelures -11- qui sont agencées de sorte qu'elles entourent la section de l'élément tubulaire -21-.

L'existence desdits logements -14- et -15- dans les pièces corps -16- et couvercle -17-, est essentielle au système préconisé, car de cette façon et en emboîtant les semi-pièces -10a- et -10b-, jusqu'à ce que leur base reste appuyée sur le fond desdits logements, il n'est besoin d'aucun support et/ou positionnement ultérieur des moyens d'herméticité, par rapport à la section de l'élément tubulaire -21- avant le moment de fermer la carcasse. C'est à dire, tel qu'illustre la figure 4, dans laquelle l'élément tubulaire -21- représenté est un câble électrique, ayant trois conducteurs -22- différenciés, par le système proposé lesdits conducteurs -22- seront fixés aux bornes du dispositif -21- et lorsque le câble -21- sera tendu vers l'extérieur, il se logera dans la cannelure -11- de la semi-pièce -10b- déjà couplée au corps -16- de la carcasse, en restant entouré par l'autre semi-pièce -10a-, conformément à ce qui est illustré sur les figures 5 et 6.

Par ailleurs, la présence de plusieurs (avantageusement au moins deux) nervures -12- à coupe triangulaire, dans les semi-pièces -10a- et -10b-, adjacentes dans le sens longitudinal dans leur cannelure -11- est déterminante, car ces nervures -12- sont comprimées contre la paroi externe de l'élément tubulaire -21- de la formation pour le long de la section de fermeture d'une série de chambres adjacentes, étanches assurant l'herméticité de la fermeture de l'orifice d'accès dudit élément tubulaire -21- à l'intérieur de la carcasse.

Suffisamment décrit l'objet de ce brevet, pour pouvoir être compris par un expert en la matière, il est constaté qu'il n'est pas limité au mode de mise en oeuvre décrit et représenté, pour lequel il pourra être prévu d'autres variantes, sans pour autant sortir du domaine de l'invention.

**Revendications**

1. Système pour l'étanchéité des accès d'éléments tubulaires à des carcasses hermétiques, lesdites carcasses logeant des dispositifs de diverses natures qui ont besoin d'une protection efficace des éléments environnants, et son formées en général par deux pièces, corps et couvercle, pourvues sur tout leur périmètre de fermeture et aux ouvertures d'accès des organes de manoeuvre, de joints d'étanchéité, comportant au moins un orifice pour l'accès de câbles ou autres éléments à coupe tubulaire, audit orifice il y a un élément installé sous forme de manchon, qui en entourant coaxialement le câble ou élément tubulaire, est fixé de façon appropriée à ladite section de passage, en restant comprimé par les bords dudit orifice, ou étant complémentairement étendu par des moyens auxiliaires conventionnels prévus à cette fin, caractérisé en ce qu'il comprend deux semi-pièces jumelles, constituées par des blocs d'un matériau à forte densité, souple et résistant, chacune desdites semi-pièces comportant une cannelure à gouge qui comprend une série de nervures transversales, annulaires, lesdites semi-pièces sont agencées dans la situation de fermeture de la carcasse, avec leurs cannelures se faisant face et la conduite qu'elles définent co-alignée avec l'orifice d'accès, emboîtées par une de leurs bases, dans des logements respectifs du corps et du couvercle, lesdites semi-pièces entourant complètement ledit élément tubulaire qui a accès à l'intérieur de la carcasse, lequel, une fois convenablement couplé au dispositifs dont il s'agit, et lorsque ladite carcasse est fermée, restera agencé entre les cannelures desdites deux pièces, entouré avec compression de ses nervures annulaires contre sa paroi externe et formation de plusieurs chambres étanches, annulaires, coaxiales à la section du câble, adjacentes longitudinalement.

2. Système selon la revendication précédente, caractérisé en ce que dans le fond des cavités, où s'emboîtent les deux semi-pièces faisant l'office de fermeture étanche, elles disposent de nervures linéales qui s'étendent longitudinalement coïncidant avec le développement de la cannelure desdites pièces, flanquées de zones déprimées à orientation similaire, de sorte que lesdites nervures dans la situation de fermeture de la boîte, sont adjuvants actifs à la déformation desdites semi-pièces, en comprimant l'élément tubulaire qu'elles entourent, des deux côtés de la cannelure à gouge de celles-ci.

3. Système selon la revendication 1 et 2, caractérisé en ce que les nervures pratiquées au fond des logements recevant en ajustement la base des semi-pièces souples, sont à coupe rectangulaire.

4. Système selon la revendication 1, caractérisé en ce que les semi-pièces souples, faisant l'office de fermeture étanche, sont formées par des blocs prismatiques droits, rectangulaires, ayant une cannelure à gouge dans une de leurs faces plus grandes.

5. Système, selon les revendications 1 et 4, caractérisé en ce que les nervures transversales à la cannelure des semi-pièces souples, faisant l'office de fermeture hermétique, sont à coupe transversale triangulaire avec son sommet émoussé.

6. Système, selon la revendication 5, caractérisé en ce que les nervures transversales à la cannelure des semi-pièces souples, faisant l'office de fermeture hermétique sont équidistantes.

FIG.1

FIG. 2

FIG.3

FIG.4

FIG.5

FIG.6

Office européen
des brevets

**RAPPORT DE RECHERCHE EUROPEENNE**

Numero de la demande

EP    92 50 0026

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-4 839 471 (CLARK)<br>* le document en entier *<br>--- | 1,4-6 | H02G3/08<br>H02G15/013 |
| X | GB-A-2 186 442 (HAWKE CABLE GLANDS)<br>* page 3, ligne 25 - ligne 100; revendications 1--9; figures 1,2,6,7 *<br>--- | 1,4-6 | |
| D,A | EP-A-0 121 644 (LAHA)<br>--- | 1 | |
| D,A | EP-A-0 402 653 (SIEMENS AKTIENGESELLSCHAFT)<br>--- | 1 | |
| D,A | EP-A-0 286 340 (N.V. RAYCHEM)<br><br>----- | 1 | |

**DOMAINES TECHNIQUES RECHERCHES (Int. Cl.5 )**

H02G

Le présent rapport a été établi pour toutes les revendications

| Lieu de la recherche | Date d'achèvement de la recherche | Examinateur |
|---|---|---|
| LA HAYE | 16 JUIN 1992 | RIEUTORT A.S. |